# EUROPÄISCHE PATENTSCHRIFT

(11) **EP 0 437 688 B1**
(45) Veröffentlichungstag und Bekanntmachung des Hinweises auf die Patenterteilung: **06.07.1994**
(21) Anmeldenummer: 90120694.6
(22) Anmeldetag: 29.10.1990
(51) Int. Cl.: B23C 1/10, B23D 11/00, B23Q 3/12

(54) **Vorrichtung zur Erzeugung einer hin- und hergehenden, axialen Bewegung einer Pinole einer Fräsmaschine**
Device for executing an alternate axial movement of the spindle sleeve of a milling machine
Dispositif pour la réalisation d'un mouvement alternatif axial du fourreau de broche d'une fraiseuse

(30) Priorität: 17.01.1990 DE 4001173
(43) Veröffentlichungstag der Anmeldung: 24.07.1991
(73) Patentinhaber: BRUNO GEYER WERKZEUGBAU KUNSTSTOFFVERARBEITUNGS GmbH, D-61239 Ober-Mörlen (DE)
(72) Erfinder: Geyer, Bruno, W-6352 Ober-Mörlen (DE)
(74) Vertreter: Schlagwein, Udo, Dipl.-Ing.

(56) Entgegenhaltungen:
- CH-A- 447 770
- DE-C- 703 551
- DE-C- 877 094
- DE-C- 906 166
- DE-U- 1 783 607
- US-A- 2 508 390

## Beschreibung

Die Erfindung betrifft eine Vorrichtung zur Erzeugung einer hin- und hergehenden, axialen Bewegung einer vertikalen Pinole einer Fräsmaschine, welche zusätzlich zu einer die Pinole aufweisenden, vertikalen Spindel eine horizontale Spindel hat; derartige Vorrichtungen sind z.B. aus _{"}Dubbel-Taschenbuch für den Maschinenbau", 1986, S. 1027 bekannt.

Im Werkzeugbau müssen Formelemente nach dem Erodieren poliert werden. Dieser Arbeitsgang erfolgt üblicherweise auf einer Poliermaschine, auf der ein Polierwerkzeug eine abwechselnd aufwärts und abwärts gerichtete Hubbewegung ausführt. Das zu polierende Formelement wird dabei mit der zu polierenden fläche gegen dieses Polierwerkzeug, bei dem es sich um die Formelektrode handeln kann, gedrückt. Der Arbeitsgang des Polierens erfordert deshalb eine hierzu ausgebildete Poliermaschine.

Der Erfindung liegt die Aufgabe zugrunde, eine Vorrichtung zur Erzeugung einer hin- und hergehenden, axialen Bewegung einer Pinole einer Fräsmaschine zu entwickeln, durch die es möglich wird, eine Fräsmaschine, welche eine horizontale und eine vertikale Spindel aufweist, als Poliermaschine zu benutzen.

Diese Aufgabe wird erfindungsgemäß dadurch gelöst, daß die Vorrichtung als eine mit einer horizontalen Spindel einer Fräsmaschine zu kuppelnde, separate Getriebeeinheit ausgebildet ist und ausgangsseitig ein mit der vertikalen Pinole der Fräsmaschine zu kuppelndes, durch die Drehbewegung der horizontalen Spindel in eine hin- und hergehende Bewegung versetzbares Kuppelteil aufweist.

Mit einer solchen Vorrichtung wird es möglich, durch den Antrieb der horizontalen Spindel einer Fräsmaschine der Pinole der vertikalen Spindel der Fräsmaschine eine abwechselnd aufwärts und abwärts gerichtete Hubbewegung aufzuzwingen. Dadurch kann man die Fräsmaschine als Poliermaschine benutzen, indem man in das Spannfutter der vertikalen Spindel als Polierwerkzeug die Formelektrode einspannt, welche zuvor zum Erodieren des Formelementes benutzt wurde.

Das Aufzwingen der aufwärts und abwärts gerichteten Pinolenbewegung kann auf sehr verschiedene Weise durch eine getriebliche Kopplung der Pinole mit der horizontalen Spindel der Fräsmaschine erfolgen. Besonders einfach ist die hierzu vorgesehene Getriebeeinheit gestaltet, wenn zur Erzeugung einer hin- und hergehenden, geradlinigen Bewegung in der Getriebeeinheit ein Schieber vorgesehen ist, welcher eine quer zu seiner Bewegungsrichtung verlaufende Kulissenführung hat, in die ein von der horizontalen Spindel der Fräsmaschine angetriebener Exzenter der Getriebeeinheit eingreift.

Die ohnehin auf der Pinole vorhandene Verzahnung kann für die Erzeugung der vertikalen Pendelbewegung der Pinole benutzt werden, wenn gemäß einer vorteilhaften Ausgestaltung der Erfindung das Kuppelteil ein in eine ohnehin vorhandene Verzahnung der Pinole eingreifendes, in der Getriebeeinheit gelagertes Zahnrad ist, in welches zur Erzeugung der pendelnden Drehbewegung innerhalb der Getriebeeinheit der auf- und abbewegliche Schieber mit einer Verzahnung eingreift. Eine solche Getriebeeinheit muß so bemessen sein, daß das Zahnrad in die Verzahnung der Pinole einzugreifen vermag, wenn man die Pinole so weit aus der Fräsmaschine herausgefahren hat, daß sie außer Eingriff mit der in ihr vorgesehenen Verzahnung für die Höhenverstellung der Pinole gelangt.

Die Hubweite der Pinole kann eingestellt und damit den jeweiligen Erfordernissen beim Polieren angepaßt werden, wenn der Exzenter quer zu einer Antriebswelle verstellbar ausgebildet ist.

Der konstruktive Aufwand zur Schaffung einer Verstellmöglichkeit für den Exzenter ist besonders gering, wenn in Weiterbildung der Erfindung die Antriebswelle auf der dem Exzenter zugewandten Seite einen scheibenförmigen Kopf mit einer quer verlaufenden, hinterschnittenen Nut aufweist, in welcher ein den Exzenter aufweisender Kulissenstein mittels einer Gewindespindel verschiebbar angeordnet ist.

Zur weiteren Vereinfachung des Aufwandes für die Verstellmöglichkeit trägt es bei, wenn der Kulissenstein eine halbschalenförmige Ausnehmung mit einem in die Gewindespindel eingreifenden Gewinde aufweist. Eine solche Verstellung benötigt keine Sicherung gegen ein selbsttätiges Verstellen beim Arbeiten der Fräsmaschine.

Eine besonders einfach aufgebaute und deshalb kostengünstig herstellbare Getriebeeinheit, die leicht zu handhaben ist, zeichnet sich dadurch aus, daß sie einen um eine parallel zur horizontalen Spindel schwenkbar am Gehäuse der Fräsmaschine anlenkbaren Winkelhebel mit einer Bohrung aufweist, in welche ein in das Spannfutter der horizontalen Spindel einspannbarer Exzenter greift, und daß am der Anlenkung des Winkelhebels am Gehäuse abgewandten Ende des Winkelhebels ein auf die Verstellwelle der senkrechten Pinole befestigbarer, als Kuppelteil dienender Stellhebel schwenkbar befestigt ist. Da die Getriebeeinheit mit der verstellwelle der senkrechten Pinole verbindbar ist, benötigt die Getriebeeinheit kein in die Verzahnung der Pinole eingreifendes Zahnrad, wie das bei der zuerst beschriebenen Ausführungsform notwendig ist.

Durch die Umlaufbewegung des im horizontalen Spannfutter eingespannten Exzenters muß der Winkelhebel sich quer zu seiner Anlenkung am Gehäuse der Fräsmaschine verschieben können. Eine solche Verschiebung kann auf einfache Weise dadurch ermöglicht werden, daß zur Anlenkung des Winkelhebels am Gehäuse der Fräsmaschine ein Anschraubteil vorgesehen ist, welches einen drehbar in einen Kulissenstein greifenden Zapfen aufweist, und daß der Winkelhebel mit einer Kulissenführung auf diesem Kulissenstein begrenzt verschiebbar angeordnet ist.

Da das mit dem Winkelhebel verbundene Ende des Stellhebels sich infolge der Schwenkbewegung des Stellhebels bogenförmig bewegt, muß sich der Stellhebel relativ zum ihn tragenden Schenkel des Winkelhebels in Haupterstreckungsrichtung dieses Schenkels bewegen können. Das kann gemäß einer vorteilhaften Weiterbildung der Erfindung dadurch erreicht werden, daß der Stellhebel mittels einer Achse schwenkbar mit einem zur Achse quer verlaufenden Gleitstein verbunden ist und daß der Gleitstein in eine in Haupterstreckungsrichtung des freien Endes des Winkelhebels verlaufende, zur Seite des Stellhebels hin in radialer Richtung offene Kulisse begrenzt verdrehbar und begrenzt axial verschieblich gehalten ist.

Die Amplitude der Hubbewegung der senkrechten Pinole kann an der Getriebeeinheit eingestellt werden, wenn der in die Bohrung des Winkelhebels eingreifende Exzenter aus einem in das Spannfutter einzuspannenden Grundkörper mit einem exzentrischen Zapfen und einer auf diesen Zapfen aufgeschobenen, relativ zum Zapfen verdrehbaren und feststellbaren Exzenterhülse besteht, deren Außenmantelfläche in die Bohrung des Winkelhebels eingreift und exzentrisch zu ihrer auf den Zapfen aufschiebbaren Bohrung verläuft. Diese Ausführungsform ermöglicht eine Verstellung der Exzentrizität des Exzenters und damit des Schwenkweges des Winkelhebels.

Konstruktiv besonders einfach ist der Stellhebel mit dem freien Ende des Winkelhebels verbunden, wenn das freie Ende des Winkelhebels gabelförmig ausgebildet ist und die Bohrung zwischen den Schenkeln dieses freien Endes verläuft und wenn eine Schraube quer durch die Schenkel des freien Endes hinter dem Gleitstein geschraubt ist.

Die Erfindung läßt zahlreiche Ausführungsmöglichkeiten zu. Zur weiteren Verdeutlichung ihres Grundprinzips sind zwei davon in der Zeichnung dargestellt und werden nachfolgend beschrieben. Diese zeigt in
- Fig. 1: einen Teilbereich einer Fräsmaschine mit einer geschnitten dargestellten Getriebeeinheit nach der Erfindung,
- Fig. 2: einen horizontalen Schnitt durch die Getriebeeinheit entlang der Linie II - II in der Figur 1,
- Fig. 3: eine teilweise geschnitten dargestellte Seitenansicht einer Antriebswelle der Getriebeeinheit,
- Fig. 4: eine Vorderansicht der Antriebswelle,
- Fig. 5: eine gegenüber Figur 4 um 90 Grad verdrehte Seitenansicht der Antriebswelle,
- Fig. 6: eine Draufsicht auf einen Kulissenstein der Getriebeeinheit,
- Fig. 7: eine Seitenansicht des Kulissensteins,
- Fig. 8: eine perspektivische Darstellung einer zweiten Ausführungsform der Getriebeeinheit,
- Fig. 9: einen teilweise geschnitten dargestellten Endbereich eines Winkelhebels der Getriebeeinheit,
- Fig.10: den in Figur 9 dargestellten Endbereich in einer um 90 Grad gedrehten Position,
- Fig.11: eine Seitenansicht eines den Exzenter bildenden Grundkörpers,
- Fig.12: eine Seitenansicht einer auf den Grundkörper aufzuschiebenden Exzenterhülse.

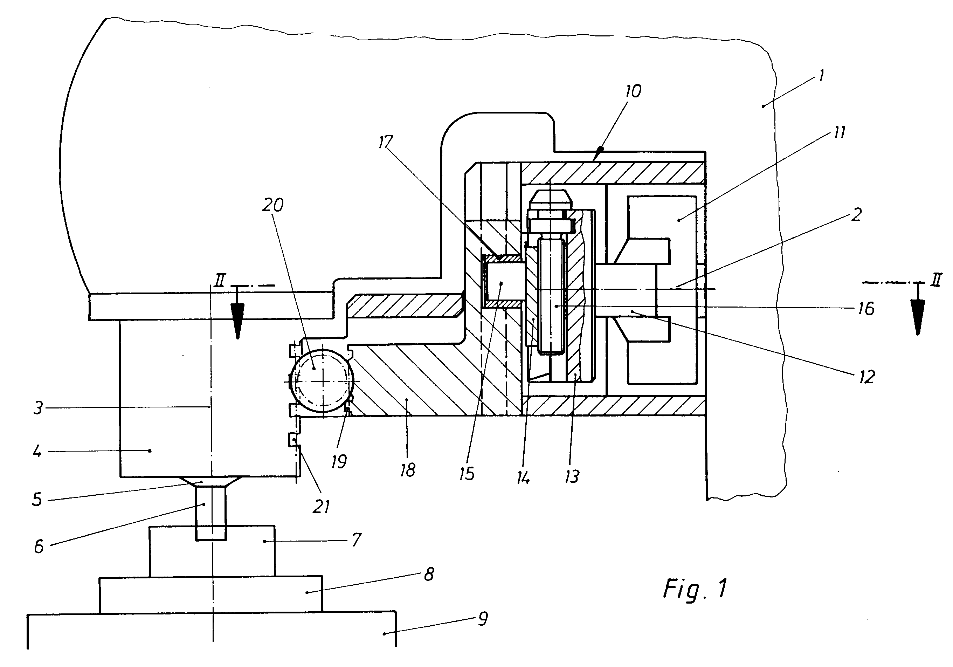

Die Figur 1 zeigt teilweise eine Fräsmaschine 1, welche eine horizontale Spindel 2 und eine vertikale Spindel 3 aufweist. Von der vertikalen Spindel 3 ist eine Pinole 4 dargestellt, welche in einem Spannfutter 5 ein Polierwerkzeug 6 trägt. Gezeigt ist weiterhin ein zu polierendes Formelement 7, welches auf einem Drehtisch 8 eines Maschinentisches 9 aufgespannt ist.

Wichtig für die vorliegende Erfindung ist die Gestaltung einer Getriebeeinheit 10, die über ein Spannfutter 11 der horizontalen Spindel 12 greift und auf nicht gezeigte Weise mit dem Gehäuse der Fräsmaschine 1 verschraubt ist. Diese Getriebeeinheit 10 hat eine Antriebswelle 12, die in das Spannfutter 11 gespannt ist und deshalb mit der horizontalen Spindel 2 umläuft. Die Antriebswelle 12 hat einen durchmessergrößeren Kopf 13, in dem quer zur Antriebswelle 12 verschieblich ein Kulissenstein 14 angeordnet ist, der einen Exzenter 15 trägt. Mittels einer im Kopf 13 vorgesehenen Gewindespindel 16 läßt sich der Kulissenstein 14 und damit auch der Exzenter 15 relativ zur Drehachse der horizontalen Spindel 2 verstellen.

Der Exzenter 15 greift in eine horizontale Kulissenführung 17 eines winkelförmigen Schiebers 18, der in der Getriebeeinheit 10 vertikal verschieblich angeordnet ist. Dadurch führt der Schieber 18 durch die Umlaufbewegung des Exzenters 15 eine aufwärts und abwärts gerichtete Hubbewegung aus. An seinem dem Spannfutter 11 abgewandten Ende hat der Schieber 18 eine zahnstangenartige Verzahnung 19, welche in ein Zahnrad 20 eingreift, das im Gehäuse der Getriebeeinheit 10 gelagert ist. Dieses Zahnrad 20 kämmt seinerseits in einer zahnstangenartigen Verzahnung 21 der Pinole 4. Bewegt sich der Schieber 18 infolge der Umlaufbewegung des Exzenters 15 auf und ab, dann dreht sich das Zahnrad 20 entsprechend hin und her und hebt die Pinole 4 entsprechend der Bewegung des Schiebers 18 auf und ab.

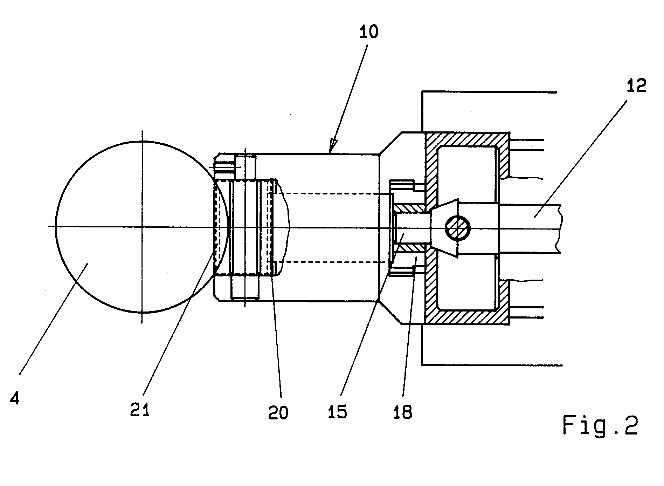

Die Figur 2 dient der weiteren Verdeutlichung der Gestaltung der Getriebeeinheit 10. Zu erkennen ist, wie diese mit ihrem Zahnrad 20 in der Verzahnung 21 der Pinole 4 kämmt. Weiterhin zeigt die Figur 2 die Antriebswelle 12, durch deren Umdrehung der Exzenter 15 seine umlaufende Bewegung ausführt, die die gewünschte aufwärts und abwärts gerichtete Bewegung des Schiebers 18 hervorruft.

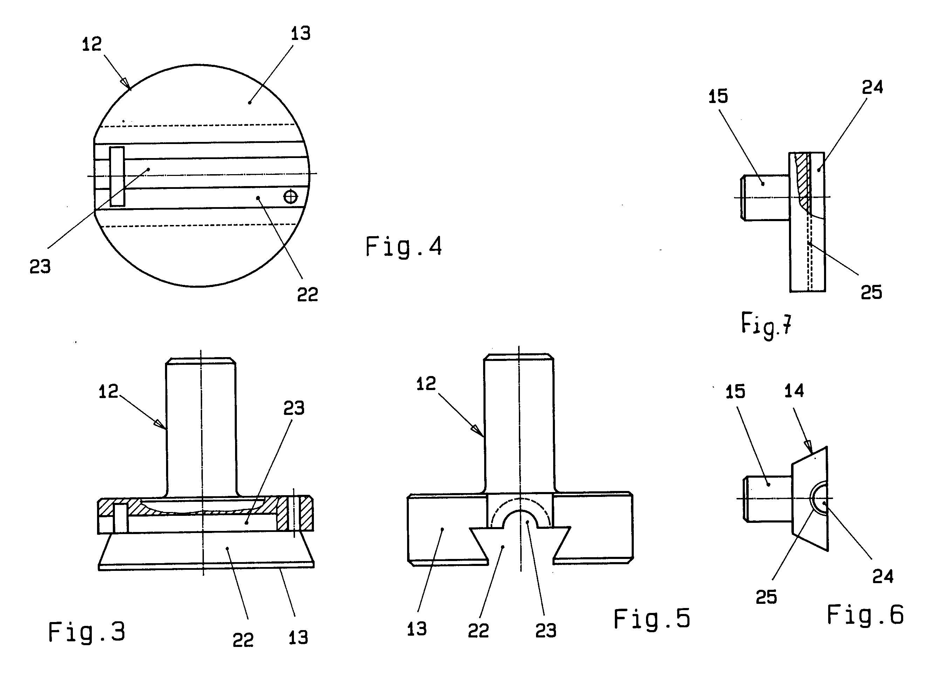

Die Figuren 3, 4 und 5 zeigen die Antriebswelle 12 als Einzelteil. Zu erkennen ist vor allem in der Figur 5, daß diese in ihrem Kopf 13 eine schwalbenschwanzförmige Nut 22 hat. Der Nutgrund hat eine im Querschnitt halbkreisförmige Ausnehmung 23, welche sich über die gesamte Länge der Nut 22 erstreckt.

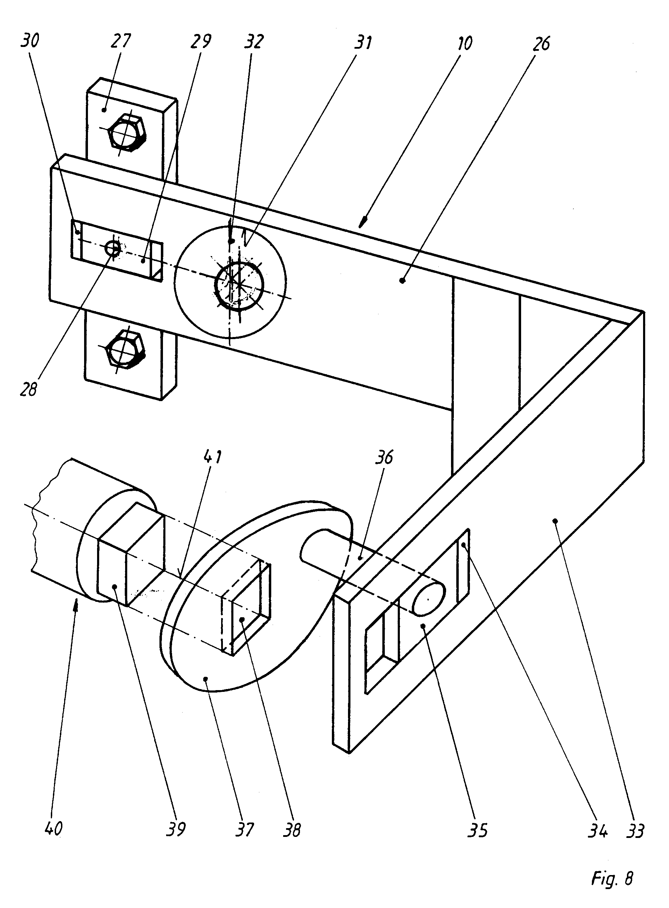

In die Nut 22 läßt sich der in den Figuren 6 und 7 als Einzelteil dargestellte Kulissenstein 14 einschieben. Der Kulissenstein 14 hat an seiner dem Exzenter 15 abgewandten Seite, also an der dem Nutgrund zugewandten Seite, eine im Querschnitt ebenfalls halbkreisförmige Ausnehmung 24, die mit einem Gewinde 25 versehen ist. Dieses Gewinde 25 greift in die Gewindespindel 16, so daß durch Verdrehen der Gewindespindel 16 der Kulissenstein 14 in der Nut 22 verschoben werden kann. Eine solche Verschiebung führt zu einer Veränderung der Exzentrizität des Exzenters 15 und damit zu einer Veränderung des Hubes des Schiebers 18, so daß entsprechend die Pinole 4 einen veränderten Hub ausführt.

Die in Figur 8 gezeigte Getriebeeinheit hat einen Winkelhebel 26, welcher mit einem Ende mittels eines Anschraubteiles 27 am nicht gezeigten Gehäuse der Fräsmaschine zu befestigen ist. Dieses Anschraubteil 27 hat einen Zapfen 28, welcher verdrehbar in einen Kulissenstein 29 greift. Der Kulissenstein 29 seinerseits greift in eine Kulissenführung 30 des Winkelhebels 26, so daß der Winkelhebel 26 schwenkbar und zugleich verschieblich vom Anschraubteil 27 gehalten ist.

Im Winkelhebel 26 ist eine Bohrung 31 vorgesehen, in die ein Exzenter 32 greift, der in das in Figur 1 gezeigte Spannfutter 11 der horizontalen Spindel 2 einzuspannen ist. Durch die Drehbewegung des Exzenters 32 schwenkt der Winkelhebel 26 auf und ab und verschiebt sich dabei gleichzeitig geringfügig in Längserstreckungsrichtung hin und her.

Am dem Anschraubteil 27 gegenüberliegenden Ende hat der Winkelhebel 26 einen Schenkel 33 mit einer in sein freies Ende axial hineinführenden Kulisse 34, in welche ein Gleitstein 35 begrenzt verdrehbar und axial verschieblich gehalten ist. Radial vom Gleitstein 35 weg führt eine Achse 36, auf der ein Stellhebel 37 schwenkbar gelagert ist. Dieser Stellhebel 37 hat ein Vierkantloch 38, so daß er auf einen entsprechenden Vierkant 39 einer Verstellwelle 40 der senkrechten Pinole der Fräsmaschine aufgeschoben werden kann.

Die Drehbewegung des Exzenters 32 führt zu einer aufwärts und abwärts gerichteten Schwenkbewegung des Winkelhebels 26 und damit auch der Achse 36. Dadurch wird der Stellhebel 37 verschwenkt, so daß die Verstellwelle 40 eine pendelnde Bewegung um ihre Längsachse 41 ausführt.

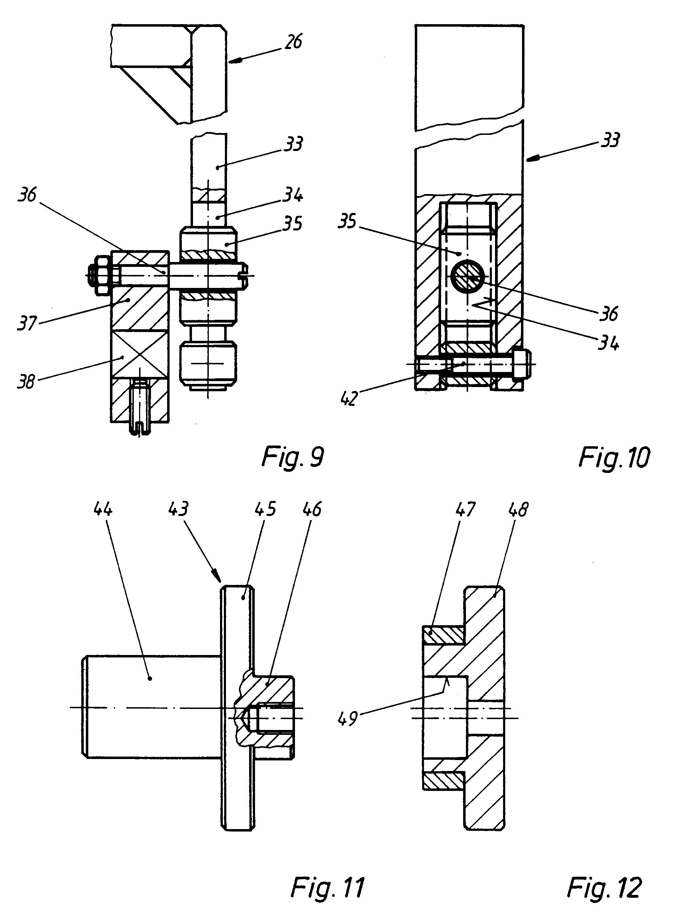

Die Figur 9 verdeutlicht die Verbindung des Stellhebels 37 mit dem Schenkel 33 des Winkelhebels 26. Zu erkennen ist, daß die Achse 36 in den Gleitstein 35 eingeschraubt ist und radial aus ihm herausragt, um den Stellhebel 37 verdrehbar lagern zu können. Der Gleitstein 35 und die ihn aufnehmende, als Bohrung ausgeführte Kulisse 34 haben einen solchen Durchmesser, daß die Kulisse 34 zu beiden Seiten des Schenkels 33 des Winkelhebels 26 hin offen ist.

Der Figur 10 ist zu entnehmen, daß das freie Ende des Schenkels 33 infolge des die Dicke des Schenkels 33 übersteigenden Durchmessers der Bohrung 34 gabelförmig ausgebildet ist und daß hinter dem Gleitstein 35 eine Schraube 42 quer durch beide Schenkel des gabelförmigen Endes hindurchführt. Diese Schraube 42 verhindert, daß die Schenkel sich aufweiten und daß der Gleitstein 35 aus der Kulisse 34 axial herausrutschen kann.

Die Figur 11 zeigt einen Grundkörper 43, welcher auf einer Seite einen in das horizontale Spannfutter 11 der Fräsmaschine 1 einspannbaren Schaft 44 und auf der gegenüberliegenden Seite eines Bundes 45 einen exzentrischen Zapfen 46 hat. Auf diesen Zapfen 46 läßt sich eine in Figur 12 dargestellte Exzenterhülse 47 mit einer Bohrung 49 aufschieben. Diese Bohrung 49 verläuft exzentrisch zur Außenmantelfläche der Exzenterhülse 47. Durch Verdrehen dieser Exzenterhülse 47 relativ zum Grundkörper 43 läßt sich die Exzentrizität des in Figur 8 als Ganzes mit 32 positionierten Exzenters verändern. Zu diesem Zweck kann zum Beispiel auf der Außenmantelfläche eines Bundes 48 der Exzenterhülse 47 eine Skala angebracht sein.

| **Auflistung der verwendeten Bezugszeichen** | | | |
|---|---|---|---|
| 1 | Fräsmaschine | 26 | Winkelhebel |
| 2 | horizontale Spindel | 27 | Anschraubteil |
| 3 | vertikale Spindel | 28 | Zapfen |
| 4 | Pinole | 29 | Kulissenstein |
| 5 | Spannfutter | 30 | Kulissenführung |
| 6 | Polierwerkzeug | 31 | Bohrung |
| 7 | Formelement | 32 | Exzenter |
| 8 | Drehtisch | 33 | Schenkel |
| 9 | Maschinentisch | 34 | Kulisse |
| 10 | Getriebeeinheit | 35 | Gleitstein |
| 11 | Spannfutter | 36 | Achse |
| 12 | Antriebswelle | 37 | Stellhebel |
| 13 | Kopf | 38 | Vierkantloch |
| 14 | Kulissenstein | 39 | Vierkant |
| 15 | Exzenter | 40 | Verstellwelle |
| 16 | Gewindespindel | 41 | Längsachse |
| 17 | Kulissenführung | 42 | Schraube |
| 18 | Schieber | 43 | Grundkörper |
| 19 | Verzahnung | 44 | Schaft |
| 20 | Zahnrad | 45 | Bund |
| 21 | Verzahnung | 46 | Zapfen |
| 22 | Nut | 47 | Exzenterhülse |
| 23 | Ausnehmung | 48 | Bund |
| 24 | Ausnehmung | 49 | Bohrung |
| 25 | Gewinde | | |

## Patentansprüche

1. Vorrichtung zur Erzeugung einer hin- und hergehenden, axialen Bewegung einer vertikalen Pinole (4) einer Fräsmaschine (1), welche zusätzlich zu einer die Pinole (4) aufweisenden, vertikalen Spindel (3) eine horizontale Spindel (2) hat, **dadurch gekennzeichnet**, daß sie als eine mit der horizontalen Spindel (2) der Fräsmaschine (1) zu kuppelnde, separate Getriebeeinheit (10) ausgebildet ist und ausgangsseitig ein mit der vertikalen Pinole (4) der Fräsmaschine (1) zu kuppelndes, durch die Drehbewegung der horizontalen Spindel (2) in eine hin- und hergehende Bewegung versetzbares Kuppelteil (Zahnrad 20) aufweist.

2. Vorrichtung nach Anspruch 1, **dadurch gekennzeichnet**, daß zur Erzeugung einer hin- und hergehenden, geradlinigen Bewegung in der Getriebeeinheit (10) ein Schieber (18) vorgesehen ist, welcher eine quer zu seiner Bewegungsrichtung verlaufende Kulissenführung (17) hat, in die ein von der horizontalen Spindel (2) der Fräsmaschine (1) angetriebener Exzenter (15) der Getriebeeinheit (10) eingreift.

3. Vorrichtung nach Anspruch 2, **dadurch gekennzeichnet**, daß das Kuppelteil ein in eine ohnehin vorhandene Verzahnung (21) der Pinole (4) eingreifendes, in der Getriebeeinheit (10) gelagertes Zahnrad (20) ist, in welches zur Erzeugung der pendelnden Drehbewegung innerhalb der Getriebeeinheit (10) der auf- und abbewegliche Schieber (18) mit einer Verzahnung (19) eingreift.

4. Vorrichtung nach den Ansprüchen 1 oder 2, **dadurch gekennzeichnet**, daß der Exzenter (15) quer zu einer Antriebswelle (12) verstellbar ausgebildet ist.

5. Vorrichtung nach Anspruch 4, **dadurch gekennzeichnet**, daß die Antriebswelle (12) auf der dem Exzenter (15) zugewandten Seite einen scheibenförmigen Kopf (13) mit einer quer verlaufenden, hinterschnittenen Nut (22) aufweist, in welcher ein den Exzenter (15) aufweisender Kulissenstein (14) mittels einer Gewindespindel (16) verschiebbar angeordnet ist.

6. Vorrichtung nach Anspruch 5, **dadurch gekennzeichnet**, daß der Kulissenstein (14) eine halbschalenförmige Ausnehmung (24) mit einem in die Gewindespindel (16) eingreifenden Gewinde (25) aufweist.

7. Vorrichtung nach Anspruch 1, **dadurch gekennzeichnet**, daß die Getriebeeinheit (10) einen um eine parallel zur horizontalen Spindel (2) verlaufende Achse schwenkbar am Gehäuse der Fräsmaschine (1) anlenkbaren Winkelhebel (26) mit einer Bohrung (31) aufweist, in welche ein in das Spannfutter (11) der horizontalen Spindel (2) einspannbarer Exzenter (32) greift, und daß am der Anlenkung des Winkelhebels (26) am Gehäuse abgewandten Ende des Winkelhebels (26) ein auf eine Verstellwelle (40) der senkrechten Pinole (4) befestigbarer, als Kuppelteil dienender Stellhebel (37) schwenkbar befestigt ist.

8. Vorrichtung nach Anspruch 7, **dadurch gekennzeichnet**, daß zur Anlenkung des Winkelhebels (26) am Gehäuse der Fräsmaschine (1) ein Anschraubteil (27) vorgesehen ist, welches einen drehbar in einen Kulissenstein (29) greifenden Zapfen (28) aufweist, und daß der Winkelhebel (26) mit einer Kulissenführung (30) auf diesem Kulissenstein (29) begrenzt verschiebbar angeordnet ist.

9. Vorrichtung nach den Ansprüchen 7 oder 8, **dadurch gekennzeichnet**, daß der Stellhebel (37) mittels einer Achse (36) schwenkbar mit einem zur Achse (36) quer verlaufenden Gleitstein (35) verbunden ist und daß der Gleitstein (35) in eine in Haupterstreckungsrichtung des freien Endes des Winkelhebels (26) verlaufende, zur Seite des Stellhebels (37) hin in radialer Richtung offene Kulisse (34) begrenzt verdrehbar und begrenzt axial verschieblich gehalten ist.

10. Vorrichtung nach Anspruch 7, **dadurch gekennzeichnet**, daß der in die Bohrung (31) des Winkelhebels (10) eingreifende Exzenter (32) aus einem in das Spannfutter (11) einzuspannende Grundkörper (43) mit einem exzentrischen Zapfen (46) und einer auf diesen Zapfen (46) aufgeschobenen, relativ zum Zapfen (46) verdrehbaren und feststellbaren Exzenterhülse (47) besteht, deren Außenmantelfläche in die Bohrung (31) des Winkelhebels (26) eingreift und exzentrisch zu ihrer auf den Zapfen (46) aufschiebbaren Bohrung (49) verläuft.

11. Vorrichtung nach Anspruch 7, **dadurch gekennzeichnet**, daß das freie Ende des Winkelhebels (26) gabelförmig ausgebildet ist und die Kulisse (34) zwischen den Schenkeln dieses freien Endes verläuft und daß eine Schraube (42) quer durch die Schenkel des freien Endes hinter dem Gleitstein (35) geschraubt ist.

## Claims

1. Device for producing a reciprocating axial movement of a vertical quill (4) of a milling machine (1) which has, in addition to a vertical spindle (3) comprising the quill (4), a horizontal spindle (2), characterised in that it is designed as a separate gear unit (10) to be coupled to the horizontal spindle (2) of the milling machine (1) and, at the output side, comprises a coupling part (gear-wheel 20) which is to be coupled to the vertical quill (4) of the milling machine (1) and can be set into reciprocating movement by the rotary movement of the horizontal spindle (2).

2. Device according to claim 1, characterised in that, for producing reciprocating rectilinear movement in the gear unit (10) there is provided a slider (18) having a slotted guide means (17) which extends transversely to its direction of movement and in which a cam (15) of the gear unit (10), driven by the horizontal spindle (2) of the milling machine (1), engages.

3. Device according to claim 2, characterised in that the coupling part is a gear-wheel (20) which engages in teeth (21) in the quill (4) which are provided anyway, is mounted in the gear unit (10) and in which the rising and falling slider (18) with teeth (19) engages to produce the oscillating rotary movement within the gear unit (10).

4. Device according to claims 1 or 2, characterised in that the cam (15) is designed so as to be adjustable transversely to a driving shaft (12).

5. Device according to claim 4, characterised in that the driving shaft (12) has, on the side facing the cam (15), a disc-shaped head (13) with a transversely extending undercut groove (22), in which a link block (14) comprising the cam (15) is movably arranged by means of a threaded spindle (16).

6. Device according to claim 5, characterised in that the link block (14) comprises a half shell-shaped recess (24) with a thread (25) engaging in the threaded spindle (16).

7. Device according to claim 1, characterised in that the gear unit (10) has an angle lever (26) adapted to pivot round a shaft extending parallel to the horizontal spindle (2) and to be articulated on the casing of the milling machine (1) with a bore (31) in which there engages a cam (32) adapted to be fixed in the chuck (11) of the horizontal spindle (2) and in that at the end of the angle lever (26) remote from the articulation of the angle lever (26) on the casing there is pivotally fastened an adjusting lever (37) adapted to be fastened on an adjusting shaft (40) of the vertical quill (4) and serving as a coupling part.

8. Device according to claim 7, characterised in that for articulating the angle lever (26) on the casing of the milling machine (1) there is provided a screw-on part (27) comprising a peg (28) engaging rotatably in a link block (29) and in that the angle lever (26) is arranged so as to be movable to a limited extent on this link block (29) with a link guide (30).

9. Device according to claims 7 or 8, characterised in that the adjusting lever (37) is connected pivotally to a sliding block (35) extending transversely to a shaft (36) by means of a shaft (36) and in that the sliding block (35) is held so as to be rotatable to a limited extent and axially movable to a limited extent in a link (34) which extends in the main extension direction of the free end of the angle lever (26) and is open radially toward the side of the adjusting lever (37).

10. Device according to claim 7, characterised in that the cam (32) engaging in the bore (31) in the angle lever (10) consists of a base member (43) to be fixed in the chuck (11) with an eccentric peg (46) and a cam sleeve (47) which is pushed onto this peg (46), is rotatable and lockable relative to the peg (46) and of which the external surface engages in the bore (31) of the angle lever (26) and extends eccentrically to its bore (49) adapted to be pushed onto the peg (46).

11. Device according to claim 7, characterised in that the free end of the angle lever (26) is fork-shaped in design and the link (34) extends between the arms of this free end and in that a screw (42) is screwed transversely through the arms of the free end beneath the sliding block (35).

## Revendications

1. Dispositif pour la réalisation d'un mouvement alternatif axial du fourreau de broche vertical (4) d'une fraiseuse (1), qui comporte, en plus de la broche (3) vertical, prévue sur le fourreau (4), une broche horizontale (2), caractérisé en ce qu'il est composé d'un dispositif de transmission (10) séparé à accoupler avec la broche (2) horizontale de la fraiseuse (1), et présente en sortie un élément de couplage (roue dentée (20)) apte au couplage avec une broche (4) verticale de la fraise (1), et entraîné dans un mouvement de va et vient au moyen du mouvement de rotation de la broche horizontale (2).

2. Dispositif selon la revendication 1, caractérisé en ce que, pour la réalisation du mouvement de va et vient rectiligne, on prévoit un coulisseau (18) dans le dispositif de transmission (10), lequel comporte un guide de coulisse (17) disposé transversalement à la direction de son déplacement et qui engrène un excentrique d'entraînement (15) de la broche horizontale (2) de la fraiseuse.

3. Dispositif selon la revendication 2, caractérisé en ce que l'élément de couplage est une zone dentée (20) située dans le dispositif de transmission (10), qui en outre s'engrène dans une denture (21) existant sur le fourreau (4), élément de couplage sur lequel s'engrène la denture (19) du coulisseau déplaçable de haut en bas, pour l'obtention du mouvement pendulaire pivotant dans le dispositif de transmission (10).

4. Dispositif selon l'une des revendications 1 à 2, caractérisé en ce que l'excentrique (15) perpendiculaire à un arbre menant (12) est monté de façon réglable.

5. Dispositif selon la revendication 4, caractérisé en ce que l'arbre menant (12) présente du côté de l'excentrique (15) une tête (13) en forme de disque avec une rainure (22) transversale en contre-dépouille dans laquelle une pièce de coulissement (14) prévue sur l'excentrique (15) est disposée de façon coulissante au moyen d'une tige filetée (16).

6. Dispositif selon la revendication 5, caractérisé en ce que la pièce de coulissement (14) présente une conformation en demi-coque (24) avec un filetage (25) s'engrenant avec une tige filetée (16).

7. Dispositif selon la revendication 1, caractérisé en ce que le dispositif de transmission (10) présente un levier coudé (26) comportant un trou (31) et articulé sur le bâti de la fraise pivotant autour d'un axe s'étendant parallèlement à la broche (2), dans lequel un excentrique (32) serrable dans le mandrin de serrage (11) de la broche horizontale (2), et en ce que un levier de manoeuvre (37) formant pièce de couplage, est fixé sur un arbre de réglage (40) du fourreau vertical (4) prévu à l'extrémité du levier coudé opposé à l'articulation dudit levier coudé sur le bâti.

8. Dispositif selon la revendication 7, caractérisé en ce que pour l'articulation du levier coudé (26) sur le bâti de la fraiseuse (1) on prévoit une pièce vissée (27) qui présente une cheville (28) pivotant dans une pièce de coulissement (29) et en ce que le levier coudé (26) est monté à coulissement limité sur cette pièce de coulissement (29) au moyen d'un guide de coulisse (30).

9. Dispositif selon l'une des revendications 7 à 8, caractérisé en ce que le levier de manoeuvre (37) est relié de façon oscillante au moyen d'un axe (36), à une pièce coulissante (35) perpendiculaire audit axe (36), et caractérisé en ce que la pièce coulissante (35) est montée à coulissement limité axialement et limité en rotation dans une coulisse ouverte (34), disposée latéralement et radialement selon la direction principale de l'extrémité libre du levier de manoeuvre.

10. Dispositif selon la revendication 7, caractérisé en ce que l'excentrique (32) monté dans le trou (31) du levier coudé (26) consiste en un corps (43) serré dans un mandrin de serrage (11) avec une cheville excentrée (46) et consiste en une douille (47) d'excentrique montée sur ladite cheville de façon à coulisser et pivoter sur celle-ci, douille dont l'enveloppe externe vient en prise dans le trou (31) du levier coudé (26) et s'étend de façon décentrée par rapport au trou (49) monté coulissant sur la cheville (46).

11. Dispositif selon la revendication 7, caractérisé en ce que l'extrémité libre du levier coudé (26) est en forme de fourche, la coulisse (34) s'étendant entre les deux extrémités libres des jambages, et en ce que une vis (42) est vissée perpendiculairement à travers les jambages et sous la pièce coulissante (35).
